# EUROPÄISCHE PATENTSCHRIFT

(11) **EP 1 900 920 B1**
(45) Veröffentlichungstag und Bekanntmachung des Hinweises auf die Patenterteilung: **18.05.2016**
(21) Anmeldenummer: 07114052.9
(22) Anmeldetag: 09.08.2007
(51) Int. Cl.: F02B 11/00, F02D 41/30, F02D 41/40, F02B 1/12, F02D 13/02, F02D 41/00

(54) **Verfahren und Vorrichtung zur Reduzierung von Geräuschen und Schwingungen in einem Hybrid-SI-HCCI-Verbrennungsmotor**
Method and apparatus for reducing noise and vibration in a hybrid SI-HCCI internal combustion engine
Méthode et dispositif pour la réduction de bruits et vibrations dans un moteur à modes de combustion multiples SI-HCCI

(30) Priorität: 15.09.2006 DE 102006043440
(43) Veröffentlichungstag der Anmeldung: 19.03.2008
(73) Patentinhaber: Ford Global Technologies, LLC, Dearborn, MI 48126 (US)
(72) Erfinder: Stoffels, Harald, 50733, Köln (DE); Wojahn, Jens, 50733, Köln (DE); Petridis, Themi, Epping, Essex CM16 7AS (GB)
(74) Vertreter: Dörfler, Thomas

(56) Entgegenhaltungen:
- EP-A1- 1 310 649
- US-A1- 2002 195 078
- US-A1- 2006 196 466

## Beschreibung

Die vorliegende Erfindung betrifft ein Verfahren und eine Vorrichtung zur Reduzierung von Geräuschen und Schwingungen (NVH, noise, vibration and harshness) in einem Hybrid-SI-HCCI-Verbrennungsmotor. Insbesondere betrifft die vorliegende Erfindung ein Verfahren und eine Vorrichtung zur Reduzierung von NVH mittels einer geeigneten Drosselklappen-Aktivierungsstrategie bei Betrieb in einem HCCI-Modus sowie auch bei Umschaltung des Betriebsmodus von einem SI-Betrieb zum HCCI-Betrieb.

Unter HCCI-Betrieb (HCCI = "Homogeneous-charge compression-ignition") wird vorliegend - in Übereinstimmung mit der üblichen Terminologie - der Betriebsmodus eines Verbrennungsmotors verstanden, bei welchem die Kraftstoffverbrennung auf einer kontrollierten Selbstzündung des dem Zylinder zugeführten Kraftstoffes beruht. Dieses Verfahren wird auch als CAI-Verfahren (CAI = "Controlled auto-ignition") bezeichnet. Ferner wird vorliegend unter dem SI-Modus in Übereinstimmung mit der üblichen Terminologie der Betriebsmodus eines Verbrennungsmotors verstanden, bei welchem die Verbrennung auf einer mittels einer Zündkerze eingeleiteten Fremdzündung beruht (SI = "Spark ignition").

Aus der US 2006/196466 A1 ist ein Verfahren bekannt, welches den Übergang zwischen dem HCCI und dem SI-Modus beschreibt, wobei während des stationären Betriebs im HCCI-Modus der Verbrennungsmotor gedrosselt wird.

Aus der US 6,237,562 B1 ist es bekannt, beim Umschalten vom SI-Modus auf den HCCI-Modus eine Zündzeitverzögerung vorzunehmen. Ferner wird ein Öffnen der Drosselklappe beim Umschalten vom SI-Modus auf den HCCI-Modus offenbart. Aus der EP 1 085 192 B1 ist ein Benzinmotor mit Verdichtungs-Selbstzündung bekannt, bei welchem bei dem Übergang zwischen dem SI-Modus und dem HCCI-Modus eine Übergangsverbrennung in Form einer geschichteten Ladungsverbrennung durchgeführt wird.

Aus der EP 1 496 231 A1 ist es bekannt, beim Umschalten vom SI-Modus in den HCCI-Modus folgende Schritte durchzuführen: Ansteuern des Auslaß- und des Einlaßventils zur Einstellung einer negativen Ventilüberschneidung, um Abgasrückstände zurückzuhalten, Ermitteln eines aktuellem Timings der Verbrennungsphase, und Korrigieren dieser Verbrennungsphase durch Erhöhung des Anteils zurückgehaltener Abgasrückstände mittels schrittweiser Steuerung eines verbrennungsspezifischen Parameters.

Aus der US 2005/0183693 A1 ist ein Verfahren und eine Vorrichtung zur Steuerung des Betriebs eines Dualmodus-HCCI-Verbrennungsmotors bekannt, wobei eine an das Ansaug- und das Abgas-Ventil gekoppelte Nockenprofil-Schaltvorrichtung vorgesehen ist, um den Maximalhub und die Ventilöffnungs-/Schließzeiten für das Einlaß- und das Auslaßventil einzustellen.

Aus der US 6,752,123 B2 ist es bekannt, das Umschalten zwischen dem SI-Modus und dem HCCI-Modus übergangslos durchzuführen, wobei eine im Vergleich zu einem stationären HCCI-Betrieb reduzierte Abgasmenge während des Umschaltprozesses rückgeführt oder in dem Zylinder belassen wird.

Aus der US 6,622,689 B2 ist ein Verfahren bzw. eine Vorrichtung zur Steuerung der Selbstzündung in einem Verbrennungsmotor bekannt, wobei die Schließzeit einer Auslaßsteuerungsvorrichtung des Zylinders während des Auslaßhubs mit abnehmender Motorlast in zunehmendem Maße vor den oberen Totpunkt verschoben wird, und während der Öffnungszeit einer Einlaßsteuerungsvorrichtung des Zylinders hinter den oberen Totpunkt verschoben wird.

Eine Aufgabe der vorliegenden Erfindung besteht darin, ein Verfahren und eine Vorrichtung zur Reduzierung von NVH in einem Hybrid-SI-HCCI-Verbrennungsmotor bereitzustellen, durch welches bzw. bei der eine Reduzierung der Dröhngeräusche (boom-noise) erreicht werden kann.

Diese Aufgabe wird durch ein Verfahren gemäß den Merkmalen des unabhängigen Patentanspruches 1 bzw. eine Vorrichtung gemäß den Merkmalen des unabhängigen Patentanspruches 10 gelöst.

Erfindungsgemäß wird während des stationären Betriebes im HCCI-Modus der Verbrennungsmotor gedrosselt. Der Erfindung liegt somit zunächst die Erkenntnis zugrunde, daß im stationären Betrieb im HCCI-Modus eines Hybrid-SI-HCCI-Verbrennungsmotors eine Reduzierung der Boom-Geräusche bei geeigneter Drosselungsstrategie erzielt werden kann.

Gemäß einer bevorzugten Ausführungsform erfolgt diese Drosselung des Verbrennungsmotors durch Einstellung der Drosselklappenposition auf einen Öffnungsgrad von weniger als 60%, vorzugsweise im Bereich von 10% bis 40%. Auf diese Weise kann eine Reduzierung des Schalldruckpegels an der Einlaßöffnung, welcher im Wesentlichen durch Boom-Geräusche zweiter Ordnung hervorgerufen wird, um bis zu typischerweise 4,5 dB erreicht werden.

Gemäß einer bevorzugten Ausführungsform wird während des stationären Betriebes im HCCI-Modus die Öffnung des Einlaßventils bei einem Kurbelwellenwinkel von mehr als 60° hinter dem oberen Totpunkt ("ATDC"), und vorzugsweise bei einem Kurbelwellenwinkel von etwa 90°, vorgenommen. Mit einem solchen IVO-Wert konnten für typische Werte von 2000 rpm und 2 bar Mitteldruck (mpe) die besten NVH-Eigenschaften bei niedriger Rauhigkeit des Geräusches erhalten werden.

Gemäß einer bevorzugten Ausführungsform wird während des stationären Betriebes im HCCI-Modus der Start des Einspritzvorganges (Start of Injection, SOI) in Richtung "spät" verschoben. Dabei erfolgt vorzugsweise während des stationären Betriebes im HCCI-Modus der Start des Einspritzvorganges bei einem Kurbelwellenwinkel von mehr als 300°, vorzugsweise im Bereich von 300° bis 325°. Dies ist insofern vorteilhaft, als ein früher Start des Einspritzvorganges zu einem lauten Nagelgeräusch des Verbrennungsmotors führt, welches durch Verschiebung des SOI in Richtung "spät" reduziert werden kann.

Es ist allgemein bekannt, daß der Einspritzvorgang nicht nur aus einem singulären Einspritzereignis bestehen muß, sondern daß die pro Arbeitstakt erforderliche Kraftstoffmenge auf zwei oder mehrere Einspritzvorgänge aufgeteilt werden kann (Split-Injection). Der erste dieser Einspritzvorgänge wird auch Voreinspritzung genannt.

Gemäß einer bevorzugten Ausführung wird während des stationären Betriebes im HCCI-Modus bei Split-Injection der Start der Voreinspritzung Richtung spät verschoben. Der Volumenanteil des eingespritzten Kraftstoffes in der Haupteinspritzung sollte für typische Werte von 2000rpm, 2bar Mitteldruck, 83% des Gesamtkraftstoffeinspritzvolumens für den jeweiligen Arbeitstakt nicht unterschreiten, d. h. maximal 17% des Kraftstoffvolumens werden in der Voreinspritzung eingespritzt. Hierdurch wird zum einen der abgestrahlte Geräuschpegel, als auch die Intensität des Nagelgeräusches verringert.

Im Falle eines Überganges aus dem SI-Modus in den HCCI-Modus wird der Einlaßventilhub verringert. Dabei erfolgt vorzugsweise die Verringerung des Einlaßventilhubes, solange sich der Verbrennungsmotor noch im SI-Modus befindet und bevor ein Öffnen der Drosselklappe vorgenommen wird. Auf diese Weise konnte ein bei großem Einlaßventilhub deutlich nachweisbarer Boom-Impuls zweiter Ordnung in Folge der Verringerung des Einlaßventilhubes beseitigt werden. Nach Erreichen des CAI-Modus kann der im ungedrosselten CAI-Modus vorhandene boom durch sanftes Drosseln reduziert werden.

Die Erfindung betrifft ferner eine Vorrichtung zur Reduzierung von NVH in einem Hybrid-SI-HCCI-Verbrennungsmotor, welche dazu ausgelegt ist, ein Verfahren mit den oben beschriebenen Merkmalen auszuführen. Bezüglich bevorzugter Ausgestaltungen und Vorteilen der Vorrichtung wird auf die obigen Ausführungen im Zusammenhang mit dem erfindungsgemäßen Verfahren verwiesen.

Weitere Ausgestaltungen der Erfindung sind der Beschreibung sowie den Unteransprüchen zu entnehmen.

Die Erfindung wird nachfolgend anhand der Figuren beispielhaft näher erläutert.

Es zeigen:
- Figur 1: den Einfluß der Drosselung im Verbrennungsmotor im CAI-Modus auf den Einlaß-Boom bei 2000 rpm und 2 bar;
- Figur 2: den Einfluß der Drosselklappenposition auf den Schalldruckpegel an der Einlaßöffnung im HCCI-Modus;
- Figur 3: den Einfluß des IVO (= Einlaßventilöffnung) auf Schalldruckpegel an der Einlaßöffnung, die Rauhigkeit und den BFSC (= bremsspezifischer Kraftstoffverbrauch);
- Figur 4: die berechnete Abhängigkeit des Luftströmungs-Schalldruckpegels und des IVO von dem Luft-Kraftstoffverhältnis;
- Figur 5: den Einfluß des SOI (= Start des Einspritzvorganges, "start of injection") auf die NVH-Eigenschaften;
- Figur 6: die Abhängigkeit des MFB (="mass-fraction-burned") von dem SOI;
- Figur 7: eine MFB-Analyse im CAI-Modus mit und ohne Zündfunkenunterstützung;
- Figur 8: ein Anregungsspektrum der Verbrennung im CAI-Modus mit und ohne Zündfunkenunterstützung;
- Figur 9: den Druck im Ansaugkrümmer (links) und das Frequenzspektrum der einströmenden Luft (rechts) vor der Drosselung beim Übergang aus dem SI-Modus bei großem Einlaßventilhub, und
- Figur 10: den Druck im Ansaugkrümmer (links) und das Frequenzspektrum der einströmenden Luft (rechts) vor der Drosselung beim Übergang aus dem SI-Modus bei kleinem Einlaßventilhub.
- Figur 11: die Abhängigkeit des abgestrahlten Geräusches und des Spitzendruckes von der Einspritzrate der Voreinspritzung
- Figur 12: die Abhängigkeit der Nagelgeräuschintensität ('KI') und korrespondierenden thermodynamischen Parametern von der Einspritzrate der Voreinspritzung

Im Rahmen der der vorliegenden Erfindung zugrunde liegenden Untersuchungen wurde zunächst für den stationären HCCI (=CAI)-Betrieb eine Analyse der Abhängigkeit der NVH-Eigenschaften, und insbesondere des Schalldruckpegels an der Einlaßöffnung, von dem Drosselklappenwinkel durchgeführt. In einen zweiten Schritt wurde der Einfluß unterschiedlicher Einlaßventilöffnungen (IVO-Wert) auf die NVH untersucht.

### 1. Stationärer HCCI-Modus

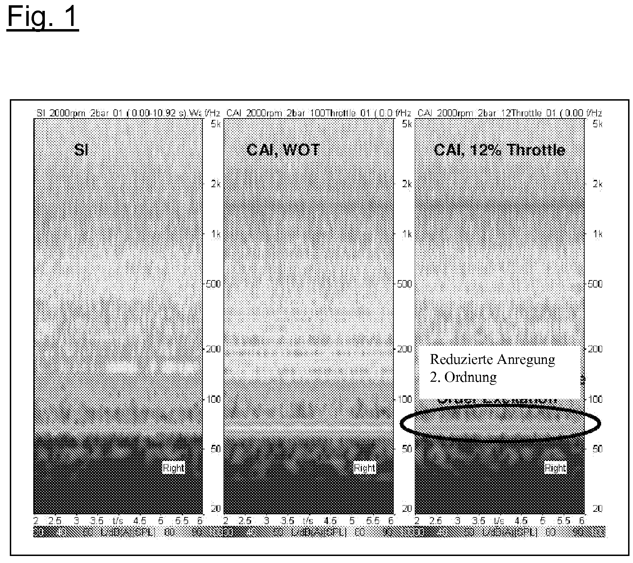

Im Ergebnis konnte durch Drosselung des Verbrennungsmotors im HCCI (CAI)-Betrieb eine Reduzierung der (durch einen negativen Überlapp verursachten) Boom-Geräusche erzielt werden, wie nachfolgend unter Bezugnahme auf die Figuren 1-3 erläutert wird. Des Weiteren konnte durch geeignete Einstellung der Einlaßventilöffnung der Schalldruckpegel an der Einlaßöffnung reduziert werden, wobei jedoch eine Erhöhung des bremsspezifischen Kraftstoffverbrauchs (BSFC-Wert) in Kauf genommen werden muß.

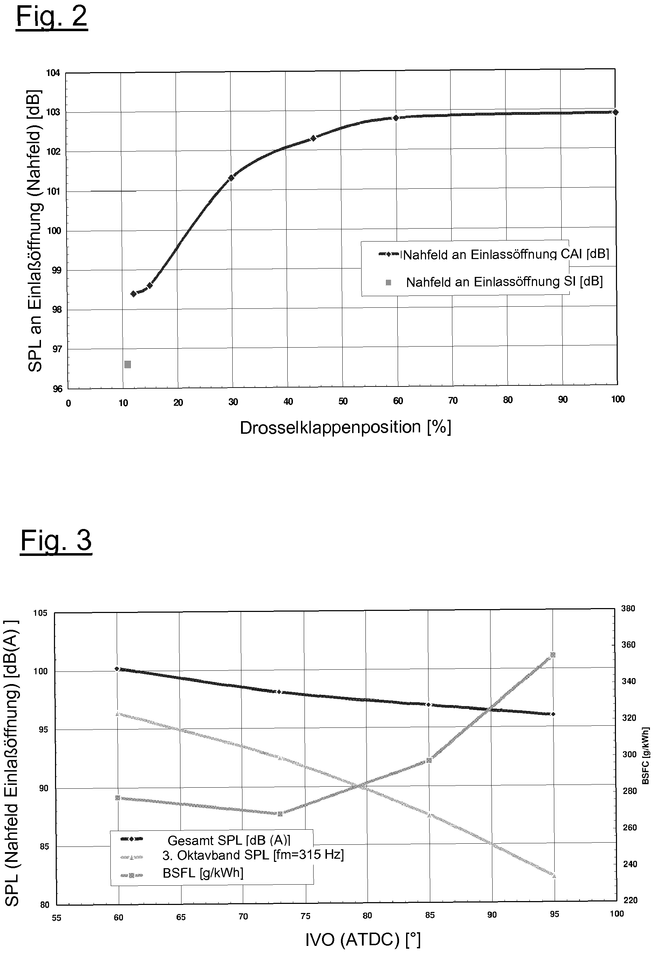

Wie aus den Figuren 1 bis 2 ersichtlich ist, konnte mittels einer Drosselung des Verbrennungsmotors während des Betriebs im CAI-Modus (= HCCI-Modus) eine Reduzierung des Schalldruckpegels an der Einlaßöffnung, welches im Wesentlichen durch Boom-Geräusche zweiter Ordnung verursacht wird (siehe Fig. 1), um etwa 4.5 dB erreicht werden (siehe Fig. 2).

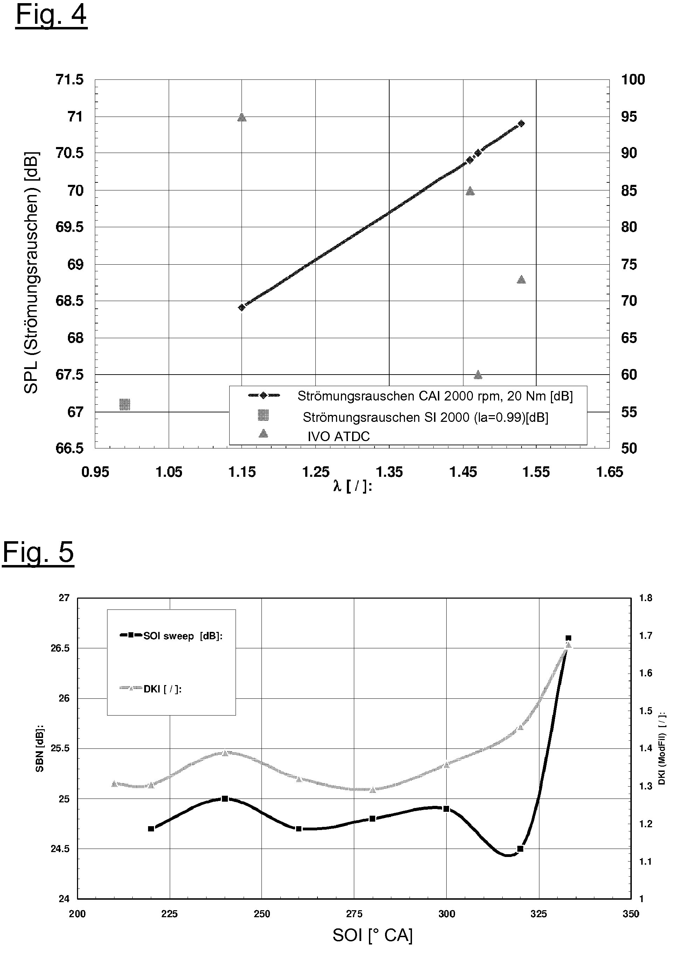

Des Weiteren zeigte sich gemäß Fig. 3 auch ein Einfluß der Einlaßventilöffnung (=IVO-Wert, IVO= "intake valve opening") auf den gesamten Schalldruckpegel an der Einlaßöffnung. Eine Änderung des IVO-Wertes von 60° nach dem oberen Totpunkt (ATDC= "after top dead center") bis auf 95° nach dem oberen Totpunkt entspricht dabei einer Reduzierung des gesamten Schalldruckpegels an der Einlaßöffnung um etwa 11 dB (A). Des Weiteren ist zu berücksichtigen, daß sich die Einlaßventilöffnung negativ auf den BSFC-Wert auswirkt (BSFC= "brake specific fuel consumption"= bremsspezifischer Kraftstoffverbrauch). Gemäß Fig. 3 ergibt sich für den ebenfalls in diesem Diagramm (rechts) aufgetragenen BSFC-Wert ein Anstieg um etwa 90 g/kWh. Eine Optimierung der NVH-Eigenschaften bei niedrigster Rauhigkeit und bei Werten von 2000 rpm (= Umdrehungen pro Minute) und 2 bar BMEP (= "brake mean effective pressure"= "mittlerer induzierter Druck") konnte für einen IVO-Wert von 90° hinter dem oberen Totpunkt (ATDC) erzielt werden. Die Wechselwirkung zwischen dem Luft-Kraftstoffverhältnis λ und dem IVO-Wert führt zu unterschiedlichen Werten des (berechneten) Luftströmungs-Schalldruckpegels, wie in Fig. 4 dargestellt ist.

Im Rahmen der der vorliegenden Erfindung zugrunde liegenden Untersuchungen wurde ferner eine Analyse des Einflusses des Startzeitpunktes des Einspritzvorganges (SOI= "start of injection") durchgeführt, welcher bei 1500 rpm (= Umdrehungen pro Minute) und 2.62 bar BMEP gemäß Fig. 5 von "spät", entsprechend einem Kurbelwellenwinkel von 210° BTDC (vor dem oberen Totpunkt) bis "früh", entsprechend einem Kurbelwellenwinkel von 333° BTDC, variiert wurde.

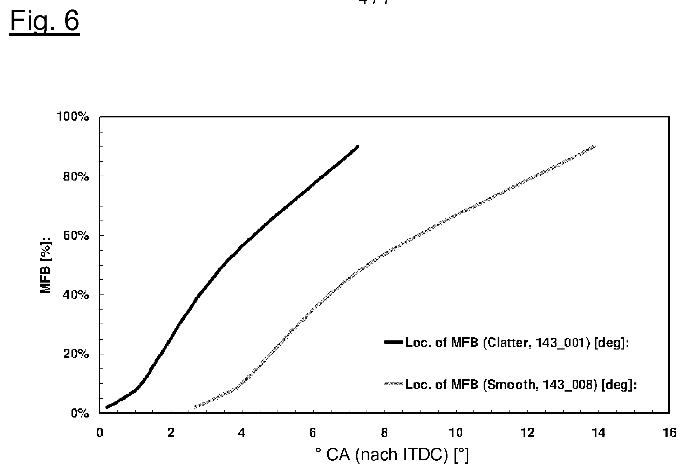

Ein früher Startzeitpunkt des Einspritzvorganges (SOI-Wert) führte zu einem lauten Klappergeräusch, welches auf einen aus Fig. 6 ersichtlichen schnelleren Anstieg des verbrannten Massenanteils (MFB= "mass fraction burned") und somit einen erhöhten dp/dα-Wert zurückgeführt werden kann und das bei Verschiebung des Startzeitpunkt des Einspritzvorganges in Richtung "spät" verringert werden konnte (als Maß dienten hierbei die gemessenen SBN-Signale sowie der DKI-Wert; DKI= "Diesel Knocking Index"= Dieselindex, jeweils in Fig. 5 dargestellt). Hinzu kommt, daß ein früher Startzeitpunkt des Einspritzvorganges zu einem früheren Beginn der Verbrennung führt und demzufolge der maximale Druck sowie der dp/dα-Wert wesentlich näher am oberen Totpunkt (TDC) liegen, was zur Anregung von Eigenmodi und zur Erzeugung von Schockwellen führt, die wiederum eine Anregung des Motoraufbaus zur Folge haben. Zudem nimmt bei einem frühen Startzeitpunkt des Einspritzvorganges auch das Kolbenklappern zu, da eine Umkehr der Kolbenbewegung schneller erfolgt als bei einem späten Start des Einspritzvorganges.

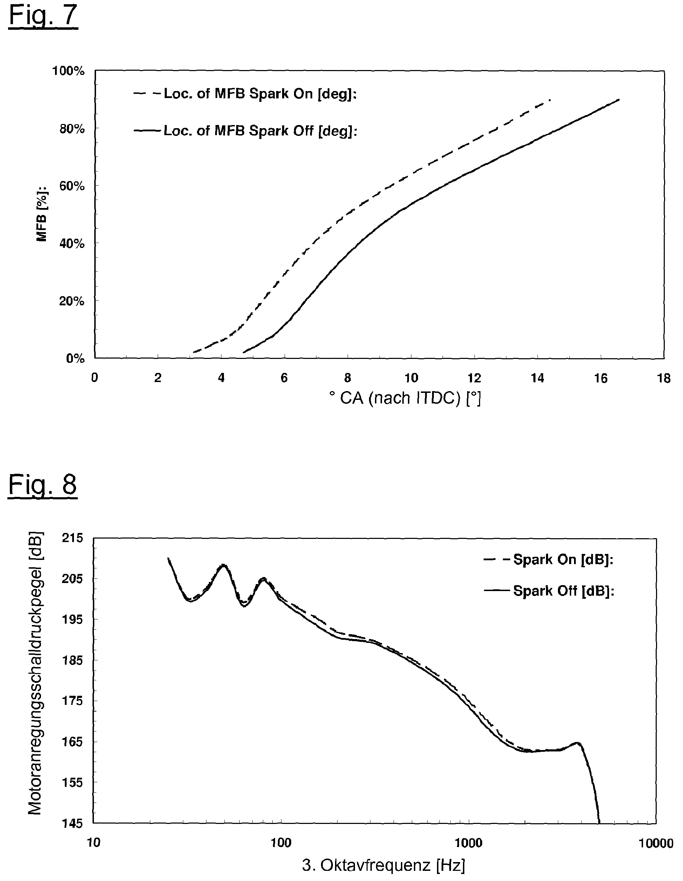

Des Weiteren wurde der Einfluß eines funkenunterstützten CAI-Modus untersucht. Bei 1500 rpm (= Umdrehungen pro Minute) und 2.62 bar BMEP wurde bei einem Start des Verbrennungsvorganges bei 280° BTDC (d. h. vor dem oberen Totpunkt) die Zündkerze aktiviert und anschließend abgeschaltet. Es wurde festgestellt, daß ein funkenunterstützter CAI-Modus zwar zu einem früheren Beginn der Verbrennung führt, ohne jedoch deren Dauer nennenswert zu beeinflussen, wie in Fig. 7 dargestellt ist. Gemäß Fig. 8, in welcher das zugehörige Anregungsspektrum für den funkenunterstützten CAI-Modus ebenso wie für den nicht- funkenunterstützten CAI-Modus dargestellt ist, ergab sich für den funkenunterstützten CAI-Modus ein Anstieg des SBN-Signals um 0.4 dB (A).

### 2. Umschaltung (= "mode switch") vom SI-Modus in den HCCI (=CAI) -Modus

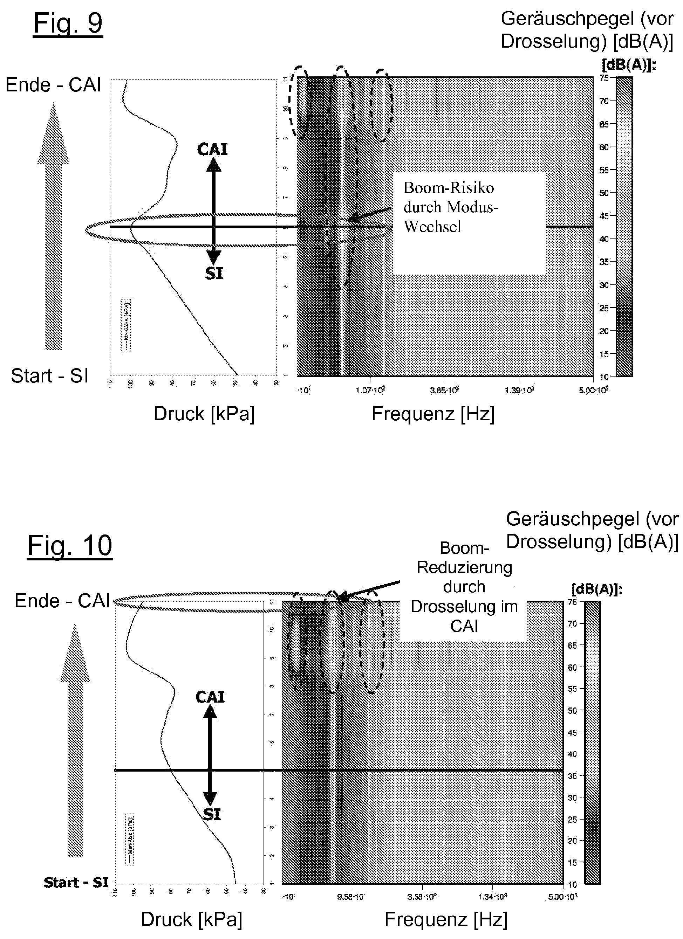

Bei Umschaltung (= "mode switch") vom SI-Modus in den HCCI (=CAI) -Modus besteht das Risiko eines temporären Boom-Geräusches bei während der ersten Zyklen ungedrosseltem Start des CAI-Modus. Es wurde ein Vergleich durchgeführt zwischen einem Abklingen des SI-Modus mit geringem Einlaßventilhub und einem Abklingen des SI-Modus mit großem Einlaßventilhub. Während bei großem Einlaßventilhub ein deutlicher Boom-Impuls erkennbar ist (siehe Fig. 9), ist bei niedrigem Einlaßventilhub ein solcher Boom-Impuls nicht erkennbar (siehe Fig. 10). Bei Umschalten in den CAI-Modus kann, wie in Fig. 10 angedeutet, ein bei ungedrosseltem Start des CAI-Modus verursachter Boom-Impuls durch sanftes Drosseln reduziert werden.

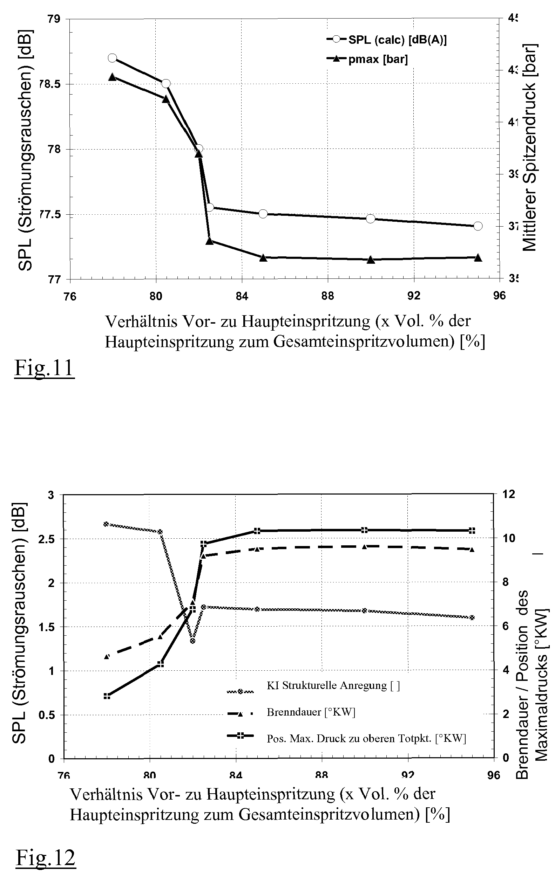

Figur 11 und 12 zeigen den Einfluß einer Split-injection auf das Geräusch.

## Patentansprüche

1. Verfahren zur Reduzierung von Geräuschen und Schwingungen (NVH= Noise Vibration Harshness) in einem Hybrid-SI-HCCI-Verbrennungsmotor, welcher sowohl einen stationären Betrieb im HCCI-Modus ("Homogeneous-charge compression-ignition") als auch einen Übergang aus einem SI-Modus ("Spark ignition") in den HCCI-Modus ermöglicht, wobei während des stationären Betriebes im HCCI-Modus der Verbrennungsmotor gedrosselt wird,
**dadurch gekennzeichnet, dass**
im Falle eines Überganges aus dem SI-Modus in den HCCI-Modus eine Verringerung des Einlaßventilhubes erfolgt, bevor ein Öffnen der Drosselklappe vorgenommen wird, wobei nach Erreichen des HCCI-Modus ein sanftes Drosseln eingeleitet wird.

2. Verfahren nach Anspruch 1,
**dadurch gekennzeichnet, dass**
die Verringerung des Einlaßventilhubes erfolgt, solange sich der Verbrennungsmotor noch im SI-Modus befindet.

3. Verfahren nach Anspruch 1 oder 2,
**dadurch gekennzeichnet, dass**
die Drosselung des Verbrennungsmotors durch Einstellung der Drosselklappenposition auf einen Öffnungsgrad von weniger als 60%, vorzugsweise im Bereich von 10% bis 40%, erfolgt.

4. Verfahren nach einem der Ansprüche 1 bis 3,
**dadurch gekennzeichnet, dass**
während des stationären Betriebes im HCCI-Modus die Öffnung des Einlassventils bei einem Kurbelwellenwinkel von mehr als 60° hinter dem oberen Totpunkt ("ATDC"), und vorzugsweise bei einem Kurbelwellenwinkel von etwa 90°, vorgenommen wird.

5. Verfahren nach Anspruch 4,
**dadurch gekennzeichnet, dass**
während des stationären Betriebes im HCCI-Modus der Start des Einspritzvorganges bei einem Kurbelwellenwinkel von mehr als 300°, vorzugsweise im Bereich von 300° bis 325°, erfolgt.

6. Verfahren nach Anspruch 4 oder 5,
**dadurch gekennzeichnet, dass**
während des stationären Betriebes im HCCI-Modus bei Split-injection der Start der Voreinspritzung in Richtung spät verschoben wird.

7. Verfahren nach Anspruch 6,
**dadurch gekennzeichnet, dass**
der Volumenanteil der Voreinspritzung am Gesamtkraftstoffeinspritzvolumen für den jeweiligen Arbeitstakt 17% nicht überschreitet.

8. Vorrichtung zur Reduzierung von Geräuschen und Schwingungen (NVH= Noise Vibration Harshness) in einem Hybrid-SI-HCCI-Verbrennungsmotor, welcher sowohl einen stationären Betrieb im HCCI-Modus ("Homogeneous-charge compression-ignition") als auch einen Übergang aus einem SI-Modus ("Spark ignition") in den HCCI-Modus ermöglicht,
**dadurch gekennzeichnet, das s**
die Vorrichtung dazu ausgelegt ist, ein Verfahren nach einem der vorhergehenden Ansprüche auszuführen.

## Claims

1. Method for reducing noise and vibration (NVH = Noise Vibration Harshness) in a hybrid SI-HCCI internal combustion engine which makes possible both stationary operation in HCCI (homogeneous charge compression ignition) mode and a transition from SI (spark ignition) mode to HCCI mode, wherein the internal combustion engine is throttled during stationary operation in HCCI mode, **characterized in that** a reduction of the intake valve lift takes place in the event of a transition from SI mode to HCCI mode before opening of the throttle plate is effected, wherein, once HCCI mode is reached, gentle throttling is initiated.

2. Method according to Claim 1, **characterized in that** the reduction of the intake valve lift takes place for as long as the internal combustion engine is still in SI mode.

3. Method according to Claim 1 or 2, **characterized in that** the throttling of the internal combustion engine is effected by adjusting the throttle plate position to a degree of opening of less than 60%, preferably in the range from 10% to 40%.

4. Method according to any one of Claims 1 to 3, **characterized in that** during stationary operation in HCCI mode opening of the intake valve is executed at a crank angle of more than 60° after top dead center (ATDC) and preferably at a crank angle of approximately 90°.

5. Method according to Claim 4, **characterized in that** during stationary operation in HCCI mode the start of the injection process takes place at a crank angle of more than 300°, preferably in the range from 300° to 325°.

6. Method according to Claim 4 or 5, **characterized in that** during stationary operation in HCCI mode with split injection, the start of the pre-injection is displaced in the direction of "late".

7. Method according to Claim 6, **characterized in that** the proportion by volume of the pre-injection does not exceed 17% of the total fuel injection volume for the respective working cycle.

8. Apparatus for reducing noise and vibration (NVH = Noise Vibration Harshness) in a hybrid SI-HCCI internal combustion engine which makes possible both stationary operation in HCCI (homogeneous charge compression ignition) mode and a transition from SI (spark ignition) mode to HCCI mode, **characterized in that** the apparatus is designed to carry out a method according to any one of the preceding claims.

## Revendications

1. Procédé de réduction de bruits et de vibrations (NVH = Noise Vibration Harshness) dans un moteur à combustion interne hybride-SI-HCCI, qui permet à la fois un fonctionnement stationnaire en mode HCCI ("Homogeneous-charge compression-ignition") ainsi qu'une transition d'un mode SI ("Spark ignition") en le mode HCCI, le moteur à combustion interne étant étranglé pendant le fonctionnement stationnaire en mode HCCI,
**caractérisé en ce que**
dans le cas d'une transition du mode SI au mode HCCI, il se produit une réduction de la course de la soupape d'admission avant qu'une ouverture du clapet d'étranglement soit effectuée, un étranglement doux étant amorcé une fois le mode HCCI atteint.

2. Procédé selon la revendication 1,
**caractérisé en ce que**
la réduction de la course de la soupape d'admission s'effectue tant que le moteur à combustion interne se trouve encore en mode SI.

3. Procédé selon la revendication 1 ou 2,
**caractérisé en ce que**
l'étranglement du moteur à combustion interne s'effectue par ajustement de la position du clapet d'étranglement à un degré d'ouverture inférieur à 60 %, de préférence dans une plage de 10 % à 40 %.

4. Procédé selon l'une quelconque des revendications 1 à 3,
**caractérisé en ce que**
pendant le fonctionnement stationnaire en mode HCCI, l'ouverture de la soupape d'admission est effectuée pour un angle de vilebrequin supérieur à 60° derrière le point mort haut ("ATDC"), de préférence pour un angle de vilebrequin d'environ 90°.

5. Procédé selon la revendication 4,
**caractérisé en ce que**
pendant le fonctionnement stationnaire en mode HCCI, le début de l'opération d'injection s'effectue pour un angle de vilebrequin supérieur à 300°, de préférence dans une plage de 300° à 325°.

6. Procédé selon la revendication 4 ou 5,
**caractérisé en ce que**
pendant le fonctionnement stationnaire en mode HCCI, pour une injection divisée, le début de la pré-injection est décalé dans le sens d'un retard.

7. Procédé selon la revendication 6,
**caractérisé en ce que**
la proportion en volume de la pré-injection par rapport au volume d'injection de carburant total pour chaque temps de travail respectif ne dépasse pas 17 %.

8. Dispositif de réduction de bruits et de vibrations (NVH = Noise Vibration Harshness) dans un moteur à combustion interne hybride-SI-HCCI, qui permet à la fois un fonctionnement stationnaire en mode HCCI ("Homogeneous-charge compression-ignition") ainsi qu'une transition d'un mode SI ("Spark ignition") en le mode HCCI,
**caractérisé en ce que**
le dispositif est conçu pour mettre en oeuvre un procédé selon l'une quelconque des revendications précédentes.
